# FASCICULE DE BREVET EUROPEEN

(11) **EP 3 030 819 B1**
(45) Date de publication et mention de la délivrance du brevet: **28.03.2018**
(21) Numéro de dépôt: 14790171.4
(22) Date de dépôt: 04.08.2014
(51) Int. Cl.: F16K 37/00

(54) **PROCEDE DE SURVEILLANCE D'UNE VANNE D'UN MOTEUR D'AERONEF**
VERFAHREN ZUR ÜBERWACHUNG EINES VENTILS EINES FLUGZEUGMOTORS
METHOD FOR MONITORING A VALVE OF AN AIRCRAFT ENGINE

(30) Priorité: 09.08.2013 FR 1357916
(43) Date de publication de la demande: 15.06.2016
(73) Titulaire: Snecma, 75015 Paris (FR)
(72) Inventeur: BENSE, William, F-77550 Moissy-Cramayel Cedex (FR)
(74) Mandataire: Brevalex
(86) Numéro de dépôt international: PCT/FR2014/052024
(87) Numéro de publication internationale: WO 2015/019010

(56) Documents cités:
- EP-A2- 0 315 391
- EP-A2- 2 202 600
- WO-A1-2009/072487
- WO-A1-2012/110733

## Description

### DOMAINE TECHNIQUE

La présente invention concerne le domaine des systèmes de surveillance d'une vanne d'un moteur d'aéronef et plus particulièrement, la détection de prémices de panne d'une vanne de type NAI.

### ÉTAT DE LA TECHNIQUE ANTÉRIEURE

Un moteur d'aéronef comporte une pluralité de vannes nécessaires aux contrôles des débits de différents fluides circulant dans le moteur. De manière générale, les vannes comportent des capteurs de position permettant de surveiller leur état de fonctionnement. La surveillance consiste alors à comparer la position commandée de la vanne à la position détectée par les capteurs de position. Une défaillance ou un endommagement d'un ou de plusieurs capteurs de position génère des messages d'alertes qui peuvent entraîner une immobilisation plus ou moins longue de l'aéronef pour une intervention de maintenance.

De plus, certaines vannes comme les vannes de dégivrage nacelle NAI (Nacelle Anti-Icing) ne comportent pas des moyens de détection de position et il est alors difficile de surveiller leur bon fonctionnement. En effet, la détection des pannes est d'autant plus difficile lorsqu'on ne peut pas constater directement la panne, mais seulement ses effets.

Les vannes NAI sont employées dans des systèmes de dégivrage pneumatique utilisés pour éviter le givrage de la nacelle. Si la vanne NAI reste bloquée en position ouverte, il y a un risque de surchauffe des composants dégivrés. Au contraire, si la vanne reste bloquée en position fermée, le givrage de la nacelle peut entrainer l'ingestion de glace par le moteur. Afin d'éviter ces problèmes, il est avantageux de détecter les prémices de panne de ces vannes avant qu'elles ne restent bloquées.

EP 2 202 600 A2 divulgue un procédé de surveillance d'une vanne d'un moteur d'aéronef comportant l'acquisition de mesures physiques relatives à ladite vanne à surveiller ainsi que d'autres vannes, lesdites mesures comprenant des mesures de pression de sortie et d'autres données de contexte. États de dégradation historiques peuvent être utilisés pour prévoir le moment d'occurrence d'une panne. L'objet de la présente invention est par conséquent de proposer un procédé et un système de détection simple à mettre en oeuvre et qui est capable de détecter rapidement avec précision et fiabilité les prémices de panne sur une vanne d'un moteur d'aéronef ainsi que de pronostiquer les anomalies.

### EXPOSÉ DE L'INVENTION

La présente invention est définie par un procédé de détection de prémices de panne d'une vanne d'un moteur d'aéronef, comportant les étapes suivantes :
- acquisition de mesures de pression de sortie de ladite vanne et de données de commande et de contexte relatives à ladite vanne,
- définition d'un ensemble d'indicateurs de prémices de panne en fonction desdites mesures de pression de sortie et desdites données de contexte et de commande,
- surveillance d'une évolution temporelle de chaque indicateur dudit ensemble d'indicateurs de prémices de panne,
- détection lors de ladite surveillance d'une éventuelle dérive d'au moins un indicateur parmi ledit ensemble d'indicateurs, ladite dérive étant représentative de prémices de panne de ladite vanne,
la détection d'une dérive d'au moins un indicateur comportant les étapes suivantes :
- détermination pour chaque indicateur d'une pente, dite pente estimée, associée à l'évolution temporelle observée de l'indicateur, et
- détection d'un éventuel comportement anormal d'une pente estimée révélateur d'une dérive de l'indicateur associé à ladite pente estimée.
Le procédé de la présente invention est très simple à mettre en oeuvre avec un nombre minimal d'opérations de calcul. De plus, ce procédé permet de détecter des prémices de panne d'une vanne ne comportant pas de capteur de position, principalement à partir de la mesure de pression de sortie. Avantageusement, la détection d'un comportement anormal d'une pente estimée comporte au moins un événement parmi les événements suivants : une rupture de pente, une pente supérieure à une première valeur seuil prédéterminé, et une pente inférieure à une seconde valeur seuil prédéterminé.

Avantageusement, la détection d'un comportement anormal d'une pente estimée comporte les étapes suivantes :
- détermination pour chaque indicateur d'une autre pente, dite pente attendue, associée à une évolution temporelle naturelle de chaque indicateur,
- calcul pour chaque indicateur d'un écart directeur entre la pente estimée et la pente attendue correspondante, et
- comparaison dudit écart directeur relatif à chaque indicateur avec un intervalle de seuil d'alerte prédéterminé correspondant.

Ainsi, toute dérive peut être détectée très rapidement avec très peu de calcul et avec une grande précision. L'intervalle de seuil d'alerte prédéterminé peut être sélectionné en fonction de l'indicateur.

Avantageusement, le procédé comporte une phase d'apprentissage pour définir l'évolution temporelle naturelle de chaque indicateur et pour déterminer la pente attendue relative à chaque indicateur à partir de son évolution temporelle naturelle.

Ceci permet de comparer avec une grande efficacité l'évolution observée à l'évolution naturelle d'un indicateur afin de détecter la moindre variation de pente.

Avantageusement, le procédé comporte un déclenchement d'une alerte de prémices de panne si ledit écart directeur relatif à au moins un indicateur est au-delà dudit intervalle de seuil d'alerte prédéterminé au cours d'un ensemble déterminé de vols.

Selon une variante, le procédé comporte les étapes suivantes :
- déclenchement d'une alerte de niveau bas si ledit écart directeur relatif à un indicateur diminue au cours d'un ensemble déterminé de vols,
- déclenchement d'une alerte de niveau moyen si ledit écart directeur relatif à un indicateur reste constant au cours d'un ensemble déterminé de vols, et
- déclenchement d'une alerte de niveau haut si ledit écart directeur relatif à un indicateur augmente au cours d'un ensemble déterminé de vols.

Selon une autre variante, le procédé comporte les étapes suivantes :
- déclenchement d'une alerte de niveau bas si un seul indicateur présente un écart directeur au-delà dudit intervalle de seuil d'alerte prédéterminé,
- déclenchement d'une alerte de niveau moyen si deux indicateurs présentent un écart directeur au-delà dudit intervalle de seuil d'alerte prédéterminé, et
- déclenchement d'une alerte de niveau haut si au moins trois indicateurs présentent un écart directeur au-delà dudit intervalle de seuil d'alerte prédéterminé.

Selon un autre mode de réalisation préféré de l'invention, le procédé comporte les étapes suivantes :
- extrapolation de l'évolution temporelle observée de chaque indicateur jusqu'à un horizon prédéterminé de nombre de vols, et
- calcul pour chaque indicateur d'une probabilité de dépassement d'un seuil prévisionnel prédéterminé par la valeur de l'indicateur à l'horizon.

Ceci permet de pronostiquer une éventuelle anomalie de la vanne à l'horizon donné.

Selon encore un autre mode de réalisation préféré de l'invention, le procédé comporte les étapes suivantes :
- définition pour chaque indicateur d'une mesure de probabilité de dépassement d'un seuil prévisionnel prédéterminé,
- extrapolation de l'évolution temporelle observée de chaque indicateur, et
- calcul d'un horizon prévisionnel pour chaque indicateur au bout duquel ladite mesure de probabilité est atteinte.

Ceci permet de pronostiquer la durée de vie de la vanne.

Avantageusement, les données de contexte comportent des données de pression ambiante, de pression d'alimentation de la vanne et des mesures de température, et les données de commande comportent des instants de commande de l'ouverture et de la fermeture de ladite vanne.

L'acquisition des données de contexte et de commande ne nécessite pas des moyens supplémentaires tout en permettant d'affiner la définition des indicateurs. En effet, les données de contexte sont facilement disponibles à partir d'un système de surveillance déjà existant dans l'aéronef et les données de commande sont également disponibles à partir d'un calculateur embarqué. De plus, les données de contexte servent à standardiser les indicateurs afin de permettre au système de détection de fonctionner identiquement quelles que soient les conditions d'acquisition.

Avantageusement, ledit ensemble d'indicateurs de prémices de panne comporte un ou plusieurs indicateurs parmi les indicateurs suivants :
- délai d'ouverture de ladite vanne déterminé par le délai entre l'instant de commande d'ouverture de la vanne et l'instant où la pression de sortie vérifie une fonction prédéterminée indicative d'une vanne ouverte,
- délai de fermeture de ladite vanne déterminé par le délai entre l'instant de commande de fermeture de la vanne et l'instant où la pression de sortie est environ égale à la pression ambiante,
- état d'ouverture de ladite vanne déterminé par une comparaison entre la pression de sortie et ladite fonction prédéterminée indicative d'une vanne ouverte, et
- état de fermeture de ladite vanne déterminé par une comparaison entre la pression de sortie et la pression ambiante.

L'invention vise également un système de détection de prémices de panne d'une vanne d'un moteur d'aéronef, comportant :
- des moyens d'acquisition configurés pour acquérir des mesures de pression de sortie de ladite vanne et des données de commande et de contexte relatives à ladite vanne,
- des moyens de traitement configurés pour définir un ensemble d'indicateurs de prémices de panne en fonction desdites mesures de pression de sortie et desdites données de contexte et de commande,
- des moyens de traitement configurés pour surveiller une évolution temporelle de chaque indicateur dudit ensemble d'indicateurs de prémices de panne, et

- des moyens de traitement configurés pour détecter une éventuelle dérive d'au moins un indicateur parmi ledit ensemble d'indicateurs, ladite dérive étant représentative de prémices de panne de ladite vanne,
   la détection d'une dérive d'au moins un indicateur comportant les étapes suivantes:
   - détermination pour chaque indicateur d'une pente, dite pente estimée, associée à l'évolution temporelle observée de l'indicateur, et
   - détection d'un éventuel comportement anormal d'une pente estimée révélateur d'une dérive de l'indicateur associé à ladite pente estimée.
Ces indicateurs envisagent tous les cas de fonctionnement de la vanne et sont ainsi très pertinents pour détecter les prémices de panne.

L'invention vise aussi un moteur d'aéronef, comportant un système de détection selon les caractéristiques ci-dessus.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
La Fig. 1 illustre de manière schématique un système de détection de prémices de panne d'une vanne d'un moteur d'aéronef, selon l'invention ;
La Fig. 2 est un graphique illustrant la pression de sortie en fonction de la pression ambiante pour une vanne normalement fermée ;
La Fig. 3 est un graphique illustrant la pression de sortie en fonction de la pression d'alimentation pour une vanne normalement ouverte ;
La Fig. 4 est un graphique illustrant l'évolution temporelle d'un indicateur de prémices de panne, selon l'invention ;
La Fig. 5 est un graphique illustrant de manière schématique un procédé de pronostic de prémices de panne selon un mode de réalisation préféré de l'invention ; et
La Fig. 6 est un graphique illustrant de manière schématique un procédé de pronostic de durée de vie de la vanne selon un mode de réalisation préféré de l'invention.

### EXPOSÉ DÉTAILLÉ DE MODES DE RÉALISATION PARTICULIERS

Le concept à la base de l'invention repose sur un suivi temporel d'indicateurs pertinents de détection de prémices de panne construits pratiquement à partir de la mesure de la pression.

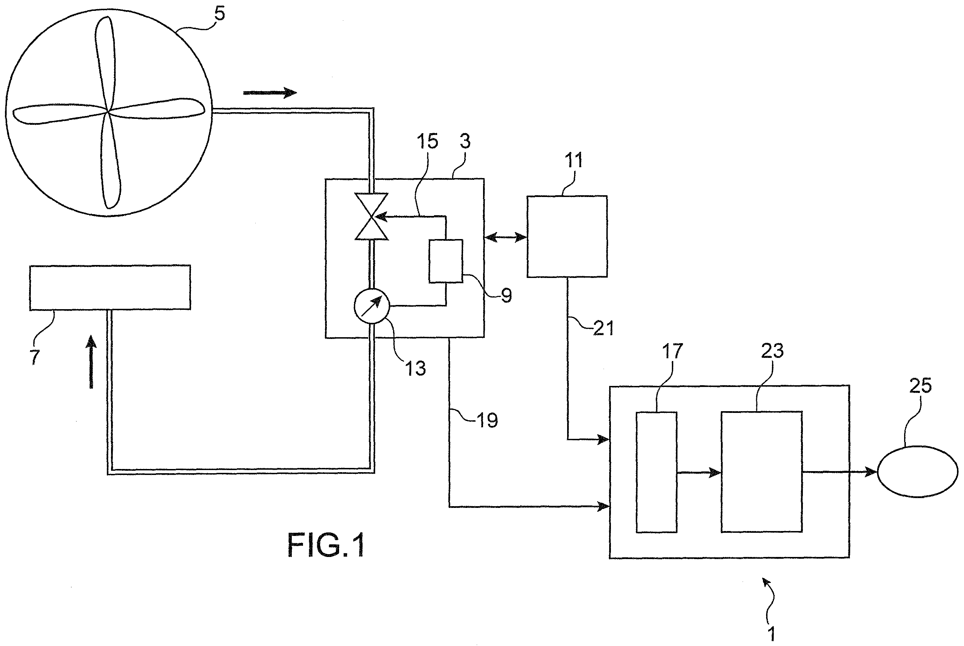

La Fig. 1 illustre de manière schématique un système de détection 1 de prémices de panne d'une vanne 3 d'un moteur d'aéronef, selon l'invention.

Une vanne 3 de prélèvement d'air du type PRSOV (Pressure Regulating Shut Off Valve) prélève de l'air depuis le compresseur 5 du moteur pour l'amener vers d'autres équipements de l'aéronef. Par exemple dans le cas d'une vanne NAI, l'air chaud prélevé au niveau du compresseur 5 est amené vers des moyens de dégivrage 7 de la nacelle du moteur d'aéronef.

On notera qu'en fonctionnement normal, ce genre de vanne de type papillon ne comporte aucune position intermédiaire, la position étant soit ouverte, soit fermée.

Habituellement, la vanne 3 comporte des moyens de commande 9 aptes à commander et à réguler la position d'ouverture ou de fermeture de la vanne 3. La position de la vanne 3 est déclenchée par les moyens de commande 9 en fonction de signaux reçus depuis un calculateur 11 embarqué et/ou des organes de commandes actionnables par l'équipage.

En outre, la vanne 3 comporte un capteur de pression 13 qui mesure la pression de sortie fournie par la vanne 3. La lecture de pression est envoyée via une boucle de contrôle 15 aux moyens de commande 9 qui ajustent alors la position de la vanne 3 en fonction de la mesure de pression afin de maintenir une pression de sortie adéquate.

Le système de détection 1 est configuré pour utiliser la mesure de pression de sortie afin de détecter des prémices de panne de la vanne 3.

Plus particulièrement, le système de détection 1 comporte des moyens d'acquisition 17 pour acquérir les valeurs de pression de sortie (flèche 19) de la vanne mesurées par le capteur de pression ainsi que des données (flèche 21) de contexte et de commande de la vanne.

Les données de contexte peuvent comporter des données de pression ambiante, de pression d'alimentation de la vanne 3 et des mesures de température par exemple au niveau de l'alimentation de la vanne 3.

A titre d'exemple, les données de contexte peuvent être obtenues depuis un système de surveillance et/ou un calculateur 11 embarqué déjà existant. En effet, l'aéronef comporte habituellement un système de surveillance (non représenté) qui relève et enregistre des mesures temporelles comportant des données de fonctionnement du moteur ainsi que des données de contexte pour surveiller le bon fonctionnement du moteur.

En variante, les données de contexte peuvent être directement obtenues depuis des capteurs spécifiques (non représentés) configurés pour mesurer les paramètres de ces données de contexte.

Par ailleurs, les données de commande comportent les instants de commande de l'ouverture et de la fermeture de la vanne 3 obtenues par exemple depuis le calculateur 11 embarqué.

Le système de détection 1 comporte également des moyens de traitement 23 pour définir un ensemble d'indicateurs de prémices de panne en fonction des mesures de pression de sortie et des données de contexte et de commande. On notera que l'ensemble d'indicateurs peut comporter un seul ou plusieurs indicateur(s) pertinent(s).

Un premier indicateur peut concerner le délai de fermeture de la vanne 3 qui peut être déterminé par le délai entre l'instant de commande de fermeture de la vanne 3 et l'instant où la pression de sortie est environ égale à la pression ambiante éventuellement après un certain temps de confirmation.

Un deuxième indicateur concerne l'état de fermeture de la vanne 3 afin de s'assurer que la vanne est hermétique lorsqu'elle est fermée. Ceci peut être déterminé par une comparaison entre la pression de sortie et la pression ambiante.

On notera qu'après la commande de fermeture de la vanne 3, on attend un certain temps de confirmation supérieur au délai normal de fermeture de la vanne avant de prendre en compte les mesures de pression de sortie afin d'être sûr qu'une vanne fonctionnant normalement a eu le temps nécessaire pour se fermer. Avantageusement, la pression de sortie est mesurée tout au long d'une période prédéterminée afin de calculer une moyenne de ces mesures.

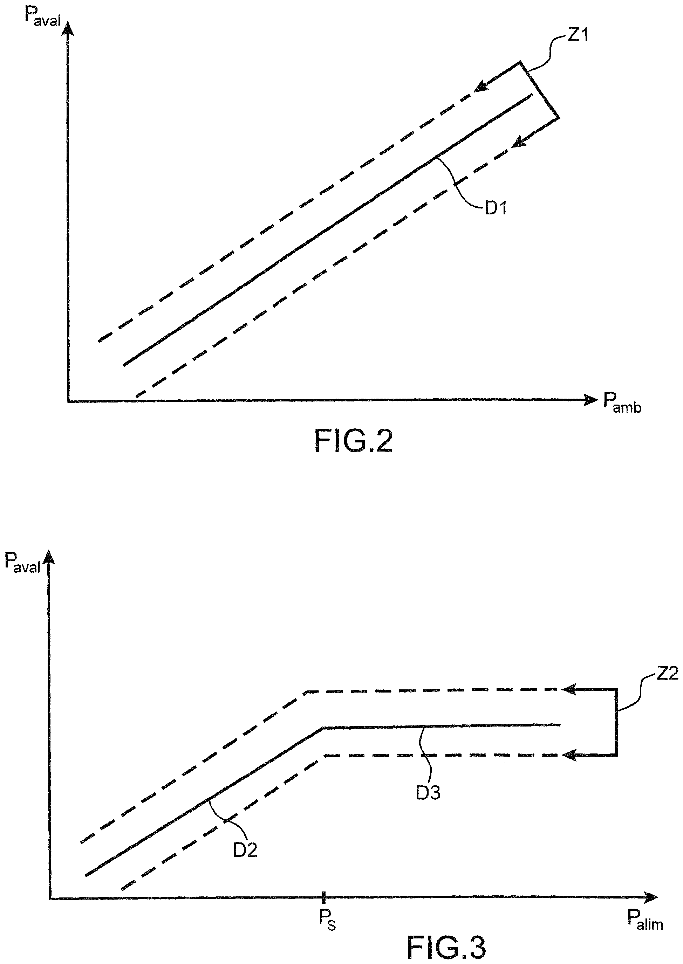

La Fig. 2 est un graphique illustrant la pression de sortie Pₐᵥₐₗ en fonction de la pression ambiante P_{amb} pour une vanne normalement fermée. En effet, pour une vanne hermétiquement fermée, la pression de sortie Pₐᵥₐₗ est une fonction linéaire représentée par une droite D1 de pression nominale passant par l'origine. La droite D1 peut être encadrée par une zone Z1 acceptable de dispersion due à une imprécision de la mesure.

Un troisième indicateur concerne le délai d'ouverture de la vanne 3. Ce délai d'ouverture est déterminé par la mesure du délai entre l'instant de commande d'ouverture de la vanne 3 et l'instant où la pression de sortie Pₐᵥₐₗ vérifie une fonction prédéterminée indicative d'une vanne ouverte éventuellement après un certain temps de confirmation.

Cette fonction prédéterminée dépend de la pression d'alimentation.

Un quatrième indicateur concerne l'état d'ouverture de la vanne 3. Ceci peut être déterminé par une comparaison entre la pression de sortie Pₐᵥₐₗ et ladite fonction prédéterminée indicative d'une vanne ouverte normalement. La comparaison peut être réalisée en calculant le rapport entre la pression de sortie mesurée et la pression de sortie théorique correspondante conforme à ladite fonction prédéterminée, sachant que pour un fonctionnement normal ce rapport doit être proche de l'unité.

Par précaution et comme indiqué précédemment, on attend un certain temps de confirmation supérieur au délai d'ouverture de la vanne 3 avant de prendre en compte les mesures de pression de sortie afin d'être sûr qu'une vanne fonctionnant normalement a eu le temps nécessaire pour s'ouvrir. De même, la pression de sortie Pₐᵥₐₗ est avantageusement mesurée pendant une période prédéterminée afin de calculer une moyenne de ces mesures.

La Fig. 3 est un graphique illustrant la pression de sortie Pₐᵥₐₗ en fonction de la pression d'alimentation Pₐₗᵢₘ pour une vanne normalement ouverte. Ici, la pression de sortie Pₐᵥₐₗ est représentée par une fonction prédéterminée de type affine par morceaux. La courbe de ladite fonction prédéterminée est constituée des premier et second segments de droites D2 et D3. Le premier segment de droite D2 représente une égalité entre la pression de sortie Pₐᵥₐₗ et la pression d'alimentation Pₐₗᵢₘ lorsque cette dernière est inférieure à une pression seuil Pₛ prédéterminée. Le second segment de droite D3 représente le fait que la pression de sortie Pₐᵥₐₗ reste stationnaire à une valeur égale à la pression seuil Pₛ prédéterminée lorsque la pression d'alimentation Pₐₗᵢₘ est supérieure à ladite pression seuil Pₛ. Les segments de droites D2 et D3 sont encadrés par une zone Z2 de dispersion due à une imprécision de la mesure.

Bien entendu, dans le cas d'une vanne 3 ouverte normalement, la pression de sortie Pₐᵥₐₗ est supérieure à la pression ambiante P_{amb} comme illustré sur le graphique de la Fig. 3.

Avantageusement, les moyens de traitement 23 sont en outre configurés pour normaliser ou standardiser les indicateurs en fonction de tous les autres indicateurs de prémices de panne et d'une ou plusieurs données de contexte selon une technique classique de régression. Ceci permet de former un ensemble d'indicateurs normalisés et indépendants vis-à-vis du contexte.

On notera que le système et procédé de détection selon l'invention s'applique de préférence à un indicateur normalisé mais peut aussi s'appliquer à un indicateur non normalisé. Par souci de simplification, le terme « indicateur » désigne par la suite un indicateur normalisé.

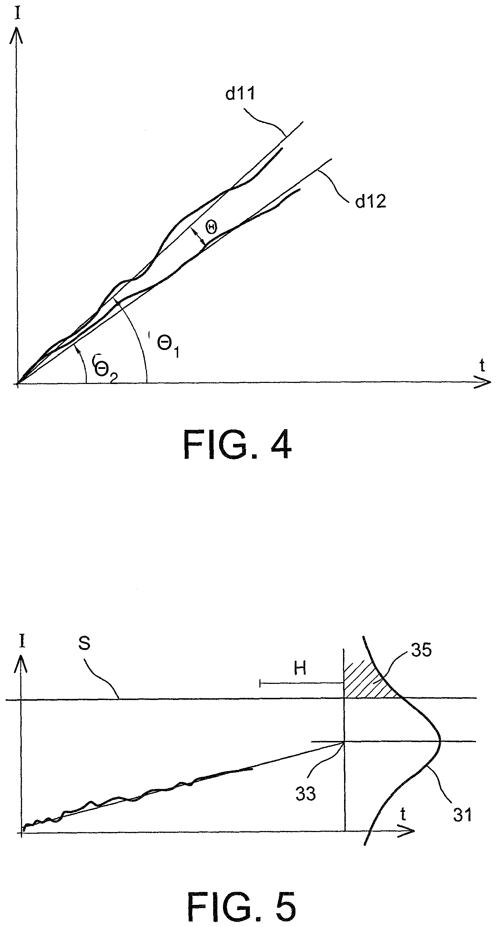

La Fig. 4 est un graphique illustrant un exemple de l'évolution temporelle d'un indicateur de prémices de panne, selon l'invention.

Ici, le temps t est représenté par un nombre de cycles d'ouverture (ou fermeture) de la vanne et par conséquent, la courbe indique la variation de l'indicateur en fonction du nombre de cycles. En variante, le temps t peut être représenté par le nombre de vol de l'aéronef qui est bien entendu, corrélé au nombre de cycles.

Les moyens de traitement 23 sont en outre configurés pour surveiller l'évolution temporelle de chaque indicateur I de l'ensemble d'indicateurs de prémices de panne.

Ainsi, en surveillant les différents indicateurs, les moyens de traitement 23 sont adaptés pour détecter une éventuelle dérive d'au moins un indicateur I, la dérive étant représentative de prémices de panne de la vanne. La dérive d'un indicateur I est détectée grâce à une pente *θ*₁ d'une droite d11 associée à l'évolution de l'indicateur. En effet, les moyens de traitement 23 sont configurés pour déterminer pour chaque indicateur une pente, dite pente estimée *θ*₁, associée à l'évolution temporelle observée (ou surveillée) de l'indicateur.

On notera que dans le cas général (non représenté), l'indicateur n'évolue presque pas et la pente reste pratiquement nulle.

Dans le cas, où l'évolution temporelle observée de l'indicateur correspond à une courbe quasiment affine, la pente peut être directement déterminée par exemple, par une technique de régression linéaire sur un intervalle donné de la courbe. Sinon, les moyens de traitement 23 sont configurés pour transformer d'abord l'évolution temporelle observée de l'indicateur en une représentation affine correspondante. Par exemple, si l'évolution temporelle observée de l'indicateur est exponentielle, alors on fait une transformation logarithmique pour se ramener au cas linéaire avant de calculer par régression linéaire la pente estimée de l'évolution de l'indicateur. Les moyens de traitement 23 sont configurés pour détecter un éventuel comportement anormal de la pente estimée qui est révélateur d'une dérive de l'indicateur associé à cette pente.

A titre d'exemple, un comportement anormal d'une pente estimée correspond à une rupture de pente, ou bien au fait que la pente est supérieure à une première valeur seuil prédéterminé ou inférieure à une seconde valeur seuil prédéterminé. Une alerte 25 de prémices de panne est alors déclenchée par les moyens de traitement 23 lorsqu'un comportement anormal d'une pente estimée a été détecté.

Selon une variante, un comportement anormal d'une pente associé à un indicateur peut être détecté en comparant la pente estimée *θ*₁ à une pente saine d'une droite d12 associée à une évolution saine de l'indicateur.

En effet, selon un mode de réalisation préféré de l'invention, les moyens de traitement 23 sont configurés pour déterminer pour chaque indicateur une autre pente, dite pente attendue *θ*₂, de la droite d12 associée à l'évolution temporelle saine ou naturelle de chaque indicateur.

On notera que comme précédemment, si l'évolution temporelle naturelle ne correspond pas à une fonction quasi affine, elle est transformée en une représentation affine pour pouvoir calculer la pente attendue associée à l'évolution temporelle naturelle de l'indicateur.

Les moyens de traitement 23 sont en outre configurés pour calculer pour chaque indicateur un écart directeur θ entre la pente estimée *θ*₁ et la pente attendue *θ*₂ correspondante. Ensuite, les moyens de traitement 23 comparent l'écart directeur θ relatif à chaque indicateur avec un intervalle de seuil d'alerte de prémices de panne prédéterminé correspondant. Avantageusement, l'intervalle de seuil d'alerte est choisi en fonction de l'indicateur, du niveau de l'alerte et de la fiabilité de la détection.

L'évolution temporelle naturelle d'un indicateur peut être déterminée soit de manière théorique à partir d'un comportement connu *a priori* de l'indicateur, soit à partir des données acquises lors d'une phase d'apprentissage.

En effet, on peut utiliser une phase d'apprentissage pour définir l'évolution temporelle naturelle de chaque indicateur à partir de données saines. Les données saines peuvent par exemple, être issues des données enregistrées lors des premiers vols ou des vols sains déjà connus.

Par ailleurs, au cas où l'écart directeur relatif à au moins un indicateur est au-delà de l'intervalle de seuil d'alerte prédéterminé (*i.e.,* plus grand que la borne supérieure de l'intervalle ou plus petit que la borne inférieure de l'intervalle), une alerte 25 de détection de prémices de panne est déclenchée par les moyens de traitement 23. Afin d'éviter les fausses alarmes, l'alerte peut être transmise si l'écart directeur relatif à au moins un indicateur reste au-delà de l'intervalle de seuil d'alerte prédéterminé pendant un ensemble déterminé de vols, par exemple, pendant un nombre déterminé k de cycles/vols parmi les n derniers cycles/vols.

Selon une variante, les moyens de traitement 23 déclenchent plusieurs niveaux d'alertes 25 en fonction de la variation temporelle de l'écart directeur relatif à un indicateur. Par exemple, une alerte de niveau bas est déclenchée si l'écart directeur relatif à un indicateur diminue au cours d'un ensemble déterminé de vols. En outre, une alerte de niveau moyen est déclenchée si l'écart directeur relatif à l'indicateur reste constant au cours de l'ensemble déterminé de vols, et finalement, une alerte de niveau haut est déclenchée si l'écart directeur augmente au cours de l'ensemble déterminé de vols.

Selon encore une autre variante, les moyens de traitement 23 déclenchent plusieurs niveaux d'alertes en fonction du nombre d'indicateurs qui présentent des écarts au-delà d'un intervalle de seuil d'alerte prédéterminé. Par exemple, une alerte de niveau bas est déclenchée si un seul indicateur présente un écart directeur au-delà de l'intervalle de seuil d'alerte prédéterminé. Une alerte de niveau moyen est déclenchée si deux indicateurs présentent un écart directeur au-delà de l'intervalle de seuil d'alerte prédéterminé, et finalement, une alerte de niveau haut est déclenchée si au moins trois indicateurs présentent un écart directeur au-delà de l'intervalle de seuil d'alerte prédéterminé.

De plus, après un déclenchement d'alerte 25 de détection de prémices de panne selon l'une quelconque des variantes ci-dessus, l'écart directeur θ peut ensuite être comparée à un deuxième intervalle de seuil de panne afin de détecter si la vanne est déjà en panne et pour déclencher une alerte de panne au cas où ce deuxième intervalle de seuil de panne est dépassé.

La Fig. 5 est un graphique illustrant de manière schématique un procédé de pronostic de prémices de panne selon un mode de réalisation préféré de l'invention.

Le graphique illustre un exemple où l'évolution temporelle d'un indicateur I de prémices de panne est linéaire. Plus particulièrement, le graphique illustre une courbe de l'évolution d'un indicateur I en fonction du nombre de cycles d'ouverture de la vanne. En variante, le temps t peut être représenté par le nombre de vols.

Les moyens de traitement 23 sont configurés pour extrapoler l'évolution temporelle observée de chaque indicateur jusqu'à un horizon H prédéterminé de nombre de vols. En effet, les moyens de traitement 23 récupèrent au point courant de l'évolution, l'historique de l'évolution afin de l'extrapoler jusqu'à l'horizon H. On notera qu'il est avantageux de faire l'extrapolation à partir d'un historique plus réduit (par exemple, les dix ou vingt derniers points) lorsque le comportement de l'indicateur commence à changer.

Par ailleurs, l'horizon H est paramétrable en fonction de l'indicateur et de la nature de son évolution. Par exemple, l'horizon H pour un indicateur présentant une rupture de pente peut être choisi plus bas que celui d'un indicateur évoluant uniformément. A titre d'exemple, l'horizon H peut être sélectionné dans un intervalle compris entre 1 vol et 100 vols avec une plage nominale entre 10 et 20 vols.

En outre, les moyens de traitement 23 sont configurés pour calculer pour chaque indicateur une probabilité de dépassement d'un seuil S prévisionnel. Plus précisément, la probabilité de dépassement mesure la probabilité que la valeur de l'indicateur à l'horizon H dépasse un seuil S prévisionnel prédéterminé. A titre d'exemple, on peut utiliser une loi normale ou de Student pour évaluer la probabilité de dépassement.

En particulier, le graphique de la Fig. 5 montre une densité de probabilité de la loi normale 31 (i.e., une répartition gaussienne) centrée sur la valeur estimée 33 de l'indicateur à l'horizon. L'aire de la partie hachurée 35 de la densité de probabilité 31 qui se trouve au dessus du seuil S prévisionnel représente alors la probabilité de dépassement de ce seuil par la valeur de l'indicateur à l'horizon sachant que l'aire totale sous la courbe vaut 1.

Le niveau du seuil S prévisionnel est bien entendu choisi par l'expert en vannes, en fonction de l'indicateur et de la fiabilité recherchée. Par exemple, pour une vanne qui met habituellement une à quatre secondes pour s'ouvrir, l'expert peut choisir un seuil de cinq secondes dans le graphique relatif à l'évolution de l'indicateur de délai d'ouverture de la vanne.

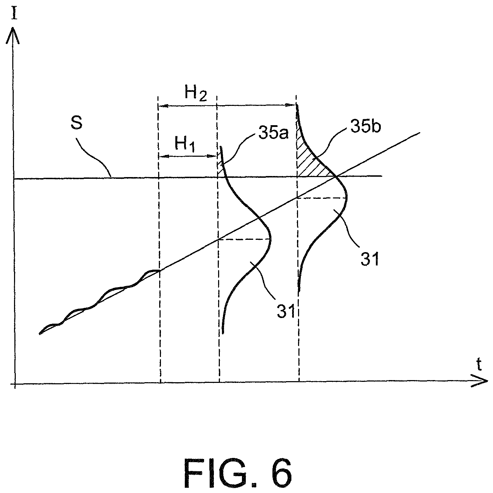

La Fig. 6 est un graphique illustrant de manière schématique un procédé de pronostic de durée de vie de la vanne selon un mode de réalisation préféré de l'invention.

Selon ce mode de réalisation, le système de détection vise à pronostiquer la durée au bout de laquelle la vanne présentera (avec une probabilité prédéterminée) des prémices de panne.

Dans ce cas, on choisit d'abord une mesure prédéterminée de probabilité de dépassement d'un seuil prévisionnel et on calcule ensuite le temps (ou plus exactement le nombre de vols ou cycles) nécessaire pour atteindre cette mesure.

Ainsi, les moyens de traitement 23 définissent d'abord pour chaque indicateur une mesure prédéterminée de probabilité traduisant le dépassement par l'indicateur d'un seuil prévisionnel prédéterminé.

Ensuite, les moyens de traitement 23 extrapolent l'évolution temporelle observée de chaque indicateur et calculent ensuite pour chaque indicateur l'horizon prévisionnel au bout duquel la mesure prédéterminée de la probabilité est atteinte.

L'exemple de la Fig. 6 montre un premier horizon H₁ associé à une probabilité de dépassement 35a inférieure à 5% ainsi qu'un deuxième horizon H₂ associé à une probabilité de dépassement 35b inférieure à 20%.

On notera que le système de détection 1 peut être intégré dans un boîtier spécifique ou faire partie d'un boîtier électronique existant. Avantageusement, on peut exploiter les moyens d'acquisition et de traitement d'un calculateur 11 embarqué dans l'aéronef ou dans un calculateur intégré dans le moteur d'aéronef de type EMU (Engine Monitoring Unit) pour exploiter le système de détection 1 selon l'invention. En particulier, le calculateur 11 peut être utilisé pour exécuter un programme d'ordinateur enregistré dans des moyens de stockage du calculateur et comportant des instructions de code pour la mise en oeuvre du procédé de détection selon l'invention.

## Revendications

1. Procédé de détection de prémices de panne d'une vanne d'un moteur d'aéronef comportant les étapes suivantes :
- acquisition de mesures de pression de sortie (Pₐᵥₐₗ) de ladite vanne (3) et de données de commande et de contexte relatives à ladite vanne (3),
- définition d'un ensemble d'indicateurs (I) de prémices de panne en fonction desdites mesures de pression de sortie et desdites données de contexte et de commande,
- surveillance d'une évolution temporelle de chaque indicateur dudit ensemble d'indicateurs de prémices de panne,
- détection lors de ladite surveillance d'une éventuelle dérive d'au moins un indicateur parmi ledit ensemble d'indicateurs, ladite dérive étant représentative de prémices de panne de ladite vanne,
**caractérisé en ce que** la détection d'une dérive d'au moins un indicateur comporte les étapes suivantes :
- détermination pour chaque indicateur d'une pente, dite pente estimée (*θ*₁), associée à l'évolution temporelle observée de l'indicateur, et
- détection d'un éventuel comportement anormal d'une pente estimée révélateur d'une dérive de l'indicateur associé à ladite pente estimée.

2. Procédé selon la revendication 1, **caractérisé en ce que** la détection d'un comportement anormal d'une pente estimée comporte au moins un événement parmi les événements suivants : une rupture de pente, une pente supérieure à une première valeur seuil prédéterminée, et une pente inférieure à une seconde valeur seuil prédéterminée.

3. Procédé selon la revendication 1, **caractérisé en ce que** la détection d'un comportement anormal d'une pente estimée comporte les étapes suivantes :
- détermination pour chaque indicateur d'une autre pente, dite pente attendue (θ₂), associée à une évolution temporelle naturelle de chaque indicateur,
- calcul pour chaque indicateur d'un écart (θ) directeur entre la pente estimée et la pente attendue correspondante, et
- comparaison dudit écart directeur relatif à chaque indicateur avec un seuil d'alerte prédéterminé correspondant.

4. Procédé selon la revendication 3, **caractérisé en ce qu'**il comporte une phase d'apprentissage pour définir l'évolution temporelle naturelle de chaque indicateur et pour déterminer la pente attendue relative à chaque indicateur à partir de son évolution temporelle naturelle.

5. Procédé selon l'une quelconque des revendications précédentes, **caractérisé en ce qu'**il comporte les étapes suivantes :
- extrapolation de l'évolution temporelle observée de chaque indicateur jusqu'à un horizon (H) prédéterminé de nombre de vols, et
- calcul pour chaque indicateur d'une probabilité de dépassement d'un seuil (S) prévisionnel prédéterminé par la valeur de l'indicateur à l'horizon.

6. Procédé selon l'une quelconque des revendications précédentes, **caractérisé en ce que** les données de contexte comportent des données de pression ambiante (P_{amb}), de pression d'alimentation (Pₐₗᵢₘ) de la vanne et des mesures de température, et **en ce que** les données de commande comportent des instants de commande de l'ouverture et de la fermeture de ladite vanne.

7. Procédé selon la revendication 6, **caractérisé en ce que** ledit ensemble d'indicateurs de prémices de panne comporte un ou plusieurs indicateurs parmi les indicateurs suivants :
- délai d'ouverture de ladite vanne déterminé par le délai entre l'instant de commande d'ouverture de la vanne et l'instant où la pression de sortie vérifie une fonction prédéterminée indicative d'une vanne ouverte,
- délai de fermeture de ladite vanne déterminé par le délai entre l'instant de commande de fermeture de la vanne et l'instant où la pression de sortie est environ égale à la pression ambiante,
- état d'ouverture de ladite vanne déterminé par une comparaison entre la pression de sortie et ladite fonction prédéterminée indicative d'une vanne ouverte, et
- état de fermeture de ladite vanne déterminé par une comparaison entre la pression de sortie et la pression ambiante.

8. Système de détection de prémices de panne d'une vanne d'un moteur d'aéronef, **caractérisé en ce qu'**il comporte :
- des moyens d'acquisition (17) configurés pour acquérir des mesures de pression de sortie de ladite vanne (3) et des données de commande et de contexte relatives à ladite vanne (3),
- des moyens de traitement (23) configurés pour définir un ensemble d'indicateurs de prémices de panne en fonction desdites mesures de pression de sortie et desdites données de contexte et de commande,
- des moyens de traitement (23) configurés pour surveiller une évolution temporelle de chaque indicateur dudit ensemble d'indicateurs de prémices de panne, et
- des moyens de traitement (23) configurés pour détecter une éventuelle dérive d'au moins un indicateur parmi ledit ensemble d'indicateurs, ladite dérive étant représentative de prémices de panne de ladite vanne,
**caractérisé en ce que** la détection d'une dérive d'au moins un indicateur comporte les étapes suivantes:
- détermination pour chaque indicateur d'une pente, dite pente estimée (91), associée à l'évolution temporelle observée de l'indicateur, et
- détection d'un éventuel comportement anormal d'une pente estimée révélateur d'une dérive de l'indicateur associé à ladite pente estimée.

9. Moteur d'aéronef, **caractérisé en ce qu'**il comporte un système de détection selon la revendication 8.

## Patentansprüche

1. Verfahren zur Erfassung der Anfänge einer Panne eines Ventils eines Motors eines Luftfahrzeugs, umfassend die folgenden Schritte:
- Erfassung von Ausgangsdruckmessungen (Pₐᵥₐₗ) des Ventils (3) und von Steuerungs- und Kontextdaten bezüglich des Ventils (3),
- Definition einer Gruppe von Indikatoren (I) von Anfängen einer Panne als Funktion der Ausgangsdruckmessungen und der Kontext- und Steuerungsdaten,
- Überwachung einer zeitlichen Entwicklung jedes Indikators der Gruppe von Indikatoren von Anfängen einer Panne,
- während der Überwachung, Erfassung einer eventuellen Drift wenigstens eines Indikators aus der Gruppe von Indikatoren, wobei die Drift repräsentativ ist für Anfänge einer Panne des Ventils,
**dadurch gekennzeichnet, dass** die Erfassung einer Drift wenigstens eines Indikators die folgenden Schritte umfasst:
- Bestimmung einer Steigung für jeden Indikator, genannt geschätzte Steigung (*θ*₁), die der beobachteten zeitlichen Entwicklung des Indikators zugeordnet ist, und
- Erfassung eines eventuellen anormalen Verhaltens einer geschätzten Steigung als Hinweis auf eine Drift des Indikators, der der geschätzten Steigung zugeordnet ist.

2. Verfahren nach Anspruch 1, **dadurch gekennzeichnet, dass** die Erfassung eines anormalen Verhaltens einer geschätzten Steigung wenigstens ein Ereignis aus den folgenden Ereignissen umfasst: eine Unterbrechung der Steigung, eine Steigung größer als ein erster vorbestimmter Schwellenwert, und eine Steigung kleiner als ein zweiter vorbestimmter Schwellenwert.

3. Verfahren nach Anspruch 1, **dadurch gekennzeichnet, dass** die Erfassung eines anormalen Verhaltens einer geschätzten Steigung die folgenden Schritte umfasst:
- Bestimmung einer anderen Steigung für jeden Indikator, genannt erwartete Steigung (*θ*₂), die einer natürlichen zeitlichen Entwicklung jedes Indikators zugeordnet ist,
- für jeden Indikator, Berechnung einer Masterabweichung (*θ*) zwischen der geschätzten Steigung und der entsprechenden erwarteten Steigung, und
- Vergleich der Masterabweichung bezüglich jedes Indikators mit einer entsprechenden vorbestimmten Alarmschwelle.

4. Verfahren nach Anspruch 3, **dadurch gekennzeichnet, dass** es eine Lernphase zum Definieren der natürlichen zeitlichen Entwicklung jedes Indikators und zum Bestimmen der erwarteten Steigung bezügliche jedes Indikators ausgehend von seiner natürlichen zeitlichen Entwicklung umfasst.

5. Verfahren nach einem der vorhergehenden Ansprüche, **dadurch gekennzeichnet, dass** es die folgenden Schritte umfasst:
- Extrapolation der beobachteten zeitlichen Entwicklung jedes Indikators bis zu einer vorbestimmten Horizont (H) von Flugzahlen, und
- für jeden Indikator, Berechnung einer Wahrscheinlichkeit des Überschreitens einer vorbestimmten Vorhersageschwelle (S) durch den Wert des Indikators beim Horizont.

6. Verfahren nach einem der vorhergehenden Ansprüche, **dadurch gekennzeichnet, dass** die Kontextdaten Daten über den Umgebungsdruck (P_{amb}), den Versorgungsdruck (Pₐₗᵢₘ) des Ventils und der Temperaturmessungen umfassen, und dass die Steuerungsdaten Zeitpunkte der Steuerung des Öffnens und des Schließens des Ventils umfassen.

7. Verfahren nach Anspruch 6, **dadurch gekennzeichnet, dass** die Gruppe von Indikatoren von Anfängen einer Panne einen oder mehr Indikatoren aus den folgenden Indikatoren umfasst:
- Öffnungsverzögerung des Ventils, bestimmt durch die Verzögerung zwischen dem Zeitpunkt der Steuerung des Öffnens des Ventils und dem Zeitpunkt, wo der Ausgangsdruck eine vorbestimmte Funktion erfüllt, die auf ein geöffnetes Ventil hinweist,
- Schließverzögerung des Ventil, bestimmt durch die Verzögerung zwischen dem Zeitpunkt der Steuerung des Schließens des Ventils und dem Zeitpunkt, wo der Ausgangsdruck ungefähr gleich dem Umgebungsdruck ist,
- Öffnungszustand des Ventils, bestimmt durch einen Vergleich zwischen dem Ausgangsdruck und der vorbestimmten Funktion, die auf ein geöffnetes Ventil hinweist, und
- Schließzustand des Ventils, bestimmt durch einen Vergleich zwischen dem Ausgangsdruck und dem Umgebungsdruck.

8. System zur Erfassung von Anfängen einer Panne eines Ventils eines Motors eines Luftfahrzeugs, **dadurch gekennzeichnet, dass** es umfasst:
- Erfassungsmittel (17), die dazu ausgelegt sind, Ausgangsdruckmessungen des Ventils (3) und Steuerungs- und Kontextdaten bezüglich des Ventils (3) zu erfassen,
- Verarbeitungsmittel (23), die dazu ausgelegt sind, eine Gruppe von Indikatoren von Anfängen einer Panne als Funktion der Ausgangsdruckmessungen und der Kontext- und Steuerungsdaten zu definieren,
- Verarbeitungsmittel (23), die dazu ausgelegt sind, eine zeitliche Entwicklung jedes Indikators der Gruppe von Indikatoren von Anfängen einer Panne zu überwachen, und
- Verarbeitungsmittel (23), die dazu ausgelegt sind, eine eventuelle Drift wenigstens eines Indikators aus der Gruppe von Indikatoren zu erfassen, wobei die Drift für Anfänge einer Panne des Ventils repräsentativ ist, **dadurch gekennzeichnet, dass** die Erfassung einer Drift wenigstens eines Indikators die folgenden Schritte umfasst:
- Bestimmung einer Steigung für jeden Indikator, genannt geschätzte Steigung (91), die der beobachteten zeitlichen Entwicklung des Indikators zugeordnet ist, und
- Erfassung eines eventuellen anormalen Verhaltens einer geschätzten Steigung als Hinweis auf eine Drift des Indikators, der der geschätzten Steigung zugeordnet ist.

9. Motor eines Luftfahrzeugs, **dadurch gekennzeichnet, dass** er ein Erfassungssystem nach Anspruch 8 umfasst.

## Claims

1. Method for detecting first signs of failure in an aircraft engine valve, comprising the following steps:
- acquisition of output pressure measurements (Pₐᵥₐₗ) of said valve (3) and command and context data related to said valve (3),
- definition of a set of indicators (I) of first signs of failure as a function of said output pressure measurements and said command and context data,
- monitoring a change over time of each indicator of said set of indicators of first signs of failure,
- detection during said monitoring of a possible deviation of at least one indicator among said set of indicators, said deviation representing the first signs of failure of said valve, **characterised in that** the detection of a deviation of at least one indicator comprises the following steps:
- determination for each indicator of a slope, called estimated slope (*θ*₁), associated with the observed change over time of the indicator, and
- detection of a possible abnormal behaviour of an estimated slope revealing a deviation of the indicator associated with said estimated slope.

2. Method according to claim 1, **characterised in that** the detection of an abnormal behaviour of an estimated slope comprises at least one event among the following events: a break in slope, a slope above a first predetermined threshold value, and a slope below a second predetermined threshold value.

3. Method according to claim 1, **characterised in that** the detection of an abnormal behaviour of an estimated slope comprises the following steps:
- determination for each indicator of another slope, called expected slope (*θ*₂), associated with a natural change over time of each indicator,
- calculating for each indicator a guiding discrepancy (*θ*), between the estimated slope and the corresponding expected slope, and
- comparison of said guiding discrepancy related to each indicator with a corresponding predetermined warning threshold.

4. Method according to claim 3, **characterised in that** it comprises a learning phase to define the natural change over time of each indicator and to determine the expected slope related to each indicator from its natural change over time.

5. Method according to claim 1, **characterised in that** it comprises the following steps:
- extrapolation of the observed change over time of each indicator up to a predetermined horizon (H) of number of flights, and
- calculating for each indicator a probability of exceeding a predetermined projected threshold (S) by the value of the indicator at the horizon.

6. Method according to claim 1, **characterised in that** the context data comprise ambient pressure data (P_{amb}), valve supply pressure data (Pₐₗᵢₘ) and temperature measurements, and **in that** the command data comprise instants of command to open and to close said valve.

7. Method according to claim 6, **characterised in that** said set of indicators of first signs of failure comprises one or more indicators among the following indicators:
- time delay to open said valve determined by the time delay between the instant of command to open the valve and the instant where the output pressure verifies a predetermined function indicative of an open valve,
- time delay to close said valve determined by the time delay between the instant of command to close the valve and the instant where the output pressure is around equal to the ambient pressure,
- state of opening of said valve determined by a comparison between the output pressure and said predetermined function indicative of an open valve, and
- state of closing of said valve determined by a comparison between the output pressure and the ambient pressure.

8. System for detecting first signs of failure in an aircraft engine valve, **characterised in that** it comprises:
- acquisition means (17) configured to acquire output pressure measurements of said valve (3) and command and context data related to said valve (3),
- processing means (23) configured to define a set of indicators of first signs of failure as a function of said output pressure measurements and said command and context data,
- processing means (23) configured to monitor a change over time of each indicator of said set of indicators of first signs of failure, and
- processing means (23) configured to detect a possible deviation of at least one indicator among said set of indicators, said deviation representing the first signs of failure of said valve, the detection of a deviation of at least one indicator comprises the following steps:
- determination for each indicator of a slope, called estimated slope (*θ*₁), associated with the observed change over time of the indicator, and
- detection of a possible abnormal behaviour of an estimated slope revealing a deviation of the indicator associated with said estimated slope.

9. Aircraft engine, **characterised in that** it comprises a system for detecting according to claim 8.
